# EUROPEAN PATENT APPLICATION

(11) **EP 2 048 011 A1**
(43) Date of publication of application: **15.04.2009**
(21) Application number: 07788662.0
(22) Date of filing: 11.07.2007
(51) Int. Cl.: B60H 1/32, B60H 1/00

(54) **AIR-CONDITIONING DEVICE FOR VEHICLES**

(30) Priority: 13.07.2006 ES 200601675 U
(71) Applicant: Dirna, S.A., 28806 Alcala de Henares (Madrid) (ES)
(72) Inventor: PÉREZ MEDIAVILLA, Rafael, E-28806 Alcalá de Henares(Madrid) (ES)
(74) Representative: Maldonado Jordan, Julia
(86) International application number: PCT/ES2007/000416
(87) International publication number: WO 2008/006919

(57) **Abstract**

The invention relates to an air-conditioning device for vehicles, comprising a case (1) which is located in the upper part of the passenger compartment to be air-conditioned. The invention also includes at least one condenser (8) and one evaporator (2). According to the invention, two compressors (4, 4') are connected to the vehicle battery.

## Description

### Object of the Invention

The present invention relates to an air-conditioning device for vehicles, and more specifically to an air-conditioning device for vehicles (particularly trucks) incorporating two compressors and having improved aerodynamic features.

### Background of the Invention

Traditional air-conditioning devices for the air conditioning or acclimatization of rooms in buildings are highly efficient. They comprise a case with an opening towards the room to be air-conditioned. Located inside the case there is a compressor connected by a coolant pipe to a condenser, and the condenser to an evaporator which is in turn connected to the compressor. The compressor compresses the coolant gas and sends it to the condenser. In the condenser, the heat is dissipated, making the coolant gas, which reaches the compressor hot, cool down and condense, being converted into high-pressure liquid. The heat exchange between the hot air of the room to be cooled and the cold coolant liquid arriving at a low pressure from the condenser takes place in the evaporator. The liquid coolant absorbs the heat from the hot air of the room, cooling it, and being converted into hot gas which is again sent to the compressor.

However, its application to the air conditioning or acclimatization of vehicles, especially truck or industrial vehicle cabs, or campers or recreational vehicles and the like, is problematic for several reasons.

First, traditional air-conditioning devices are relatively large and are completely inappropriate for their installation on a moving surface, such as the roof of a truck cab. In fact, the air drag of a traditional air-conditioning device would prevent its use for air-conditioning the interior of a truck cab or another vehicle.

Furthermore, the high consumption of traditional air-conditioning devices prevents them from being powered by connection to the engine battery of the vehicle in question.

It is therefore desirable to provide an aerodynamic feature to air-conditioning devices, as well as to reduce their consumption, in order to thereby allow their application to air-conditioning in vehicles.

### Description of the Invention

The invention consists of an air-conditioning device for vehicles comprising a case, which is located in the upper part of a passenger compartment to be air-conditioned, which houses at least one condenser and one evaporator, as well as two compressors connected to the engine battery of the vehicle which preferably operates at a voltage of twelve to twenty-four volts.

Also preferably, the air-conditioning device for vehicles of the invention has a height of between one-hundred and fifty and one-hundred and sixty millimeters.

The invention allows particularly solving the problems derived from the height of air-conditioning devices, as well as those derived from the difficulty of achieving optimal powering of the air-conditioning device for vehicles by means of the connection of the compressors to the engine battery of the vehicle in question. A considerable advantage is thus achieved for the use of the air-conditioning device, which is therefore fully applicable to the air-conditioning for a vehicle (particularly, as stated, an industrial vehicle or truck cab or the like, or inside a camper or recreational vehicle or the like).

### Description of the Drawings

The detailed description of the invention provided below will be better understood with the aid of the attached drawings in which the following is depicted with an illustrative and non-limiting character:
Figure 1 shows an organized exploded view of an embodiment of the air-conditioning device for vehicles of the invention.
Figure 2 shows another organized exploded view of the embodiment of Figure 1, in which the location of its various components and, in particular, the electric fan (although the condenser has not specifically been depicted) can be seen better.
Figure 3 shows a view of the support tray with the two compressors, and the (covered) assembly of the condenser and blower, already installed, as well as with the corresponding electric fan and with the tray of the condenser.

### Detailed Description of an Embodiment

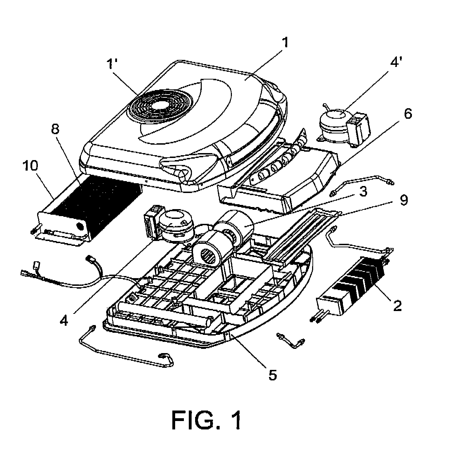

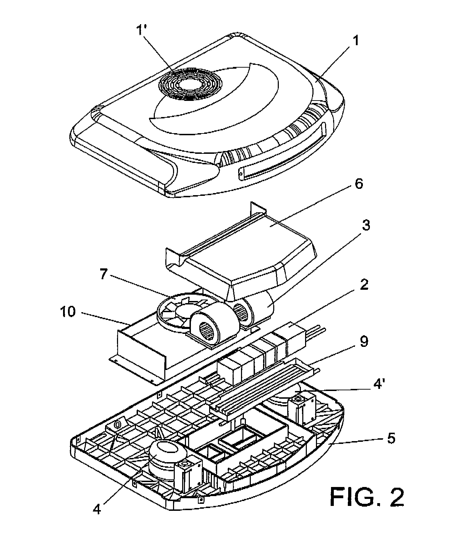

An organized exploded view of the air-conditioning device for vehicles of the invention can be seen in Figures 1 and 2.

The air-conditioning device for vehicles is located on the roof of a passenger compartment to be air-conditioned (normally the cab of a truck to which specific reference will be made hereinafter without a limiting character) and has a case 1 delimiting a small space therein together with a support base 5 which it covers and which can be fixed to the roof of the cab. The way the air-conditioning device for vehicles is fixed is conventional and will not be particularly described since it can be easily be carried out by persons skilled in the art and does not form a specific part of the object of the invention.

In a preferred embodiment, the case 1 has a reduced height (between one-hundred and fifty and one-hundred and sixty millimeters), which provides the air-conditioning device for vehicles of the invention with excellent aerodynamic properties.

The case 1 houses therein two compressors 4, 4' operating at a voltage of between twelve and twenty-four volts.

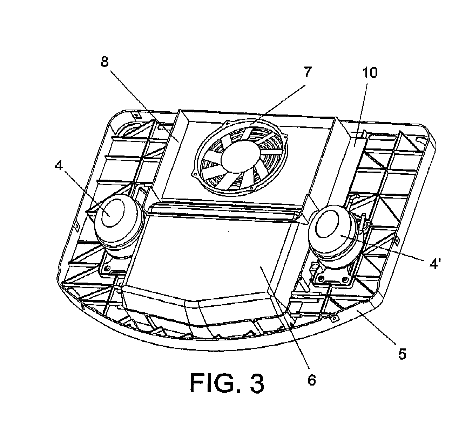

Said compressors 4, 4' are in turn connected by means of a circuit for the passage of coolant (not specifically shown) to a condenser 8, placed in a tray 10 in the embodiment shown in Figure 1. The condenser 8 is in turn connected by means of said circuit for the passage of coolant to an evaporator 2 in direct contact, through the blower 3, with the interior of the cab to be cooled and also connected to the compressors 4, 4'. The evaporator 2, placed on a drainage tray 9, and the blower 3, form an assembly which is covered with a small case 6, as can be more specifically seen in Figure 3.

The indicated elements are complemented with the electric fan 7, located under the area 1' of the case 1 and secured thereto, after the assembly covered by the case 6, as can be observed in Figure 3 (in which the condenser 8 has been omitted for the sake of simplicity, which is placed on the tray 10 and under the electric fan 7).

The installation of the air-conditioning device for vehicles of the invention is very simple. As has been indicated, it is placed on the roof of the vehicle and the equipment is connected to the battery (the connections can be made conventionally and will be known by the persons skilled in the art, therefore they have not been depicted). The air-conditioning device for vehicles of the invention is autonomous, and its operation does not require a transformer or the vehicle to be with the engine on. Said air-conditioning device can furthermore be preferably pre-loaded with coolant gas, in the circuit for the passage of coolant which has been mentioned and (as has already been stated) is not specifically depicted in the drawings (since it is known by the persons skilled in the art).

The persons skilled in the art will understand that modifications can be introduced in the embodiment described, without thus altering the essence of the invention. Thus, for example, the voltage of the compressors 4, 4' could be varied. Therefore, the attached claims rather than the previous description should be taken into account to determine the scope of the invention.

## Claims

1. An air-conditioning device for vehicles comprising a case (1), which is located in the upper part of a passenger compartment to be air-conditioned, comprising at least one condenser (8) and one evaporator (2), **characterized by** two compressors (4) (4') connected to the vehicle battery.

2. The air-conditioning device for vehicles according to claim 1, wherein each of said compressors operates at a voltage of twelve to twenty-four volts.

3. The air-conditioning device for vehicles according to any of the previous claims, further **characterized in that** the case (1) has a height of between one-hundred and fifty and one-hundred and sixty millimeters.
